# FASCICULE DE BREVET EUROPEEN

(11) **EP 4 384 377 B1**
(45) Date de publication et mention de la délivrance du brevet: **03.09.2025**
(21) Numéro de dépôt: 22755264.3
(22) Date de dépôt: 25.07.2022
(51) Int. Cl.: B29C 64/118, B29C 64/393, B33Y 10/00, B33Y 50/02, B29C 64/209, B33Y 30/00

(54) **INSTALLATION DE FABRICATION ADDITIVE PAR DÉPÔT DE FIL FONDU COMPORTANT UNE BUSE D'EXTRUSION ET UN DISPOSITIF DE MESURE ET DE CONTROLE THERMIQUE DU PROCÉDÉ**
ANLAGE ZUR ADDITIVEN FERTIGUNG DURCH ABSCHEIDUNG VON GESCHMOLZENEM DRAHT MIT EINER EXTRUSIONSDÜSE UND EINER VORRICHTUNG ZUR MESSUNG UND THERMISCHEN KONTROLLE DES PROZESSES
INSTALLATION FOR ADDITIVE MANUFACTURING BY DEPOSITING MOLTEN WIRE COMPRISING AN EXTRUSION NOZZLE AND A DEVICE FOR MEASURING AND CONTROLLING THE THERMAL PROCESS

(30) Priorité: 09.08.2021 FR 2108597
(43) Date de publication de la demande: 19.06.2024
(73) Titulaire: Cogit Composites, 18390 Saint-Germain du Puy (FR)
(72) Inventeur: ROUA, Christophe, 18000 BOURGES (FR)
(74) Mandataire: IP Trust
(86) Numéro de dépôt international: PCT/FR2022/051490
(87) Numéro de publication internationale: WO 2023/017218

(56) Documents cités:
- EP-A1- 3 398 751
- WO-A1-2017/152142
- CN-A- 107 225 754
- US-A- 5 303 141
- US-A1- 2017 297 095
- US-A1- 2019 168 458

## Description

### Domaine de l'invention

La présente invention concerne le domaine de la fabrication additive et plus particulièrement du contrôle qualité non destructif de pièces réalisées par fabrication additive par dépôt de fil fondu (FDM pour « Fused deposition modeling ou FFF pour « Fused Filament Fabrication ») ou encore par des techniques de type DED ou WAAM .

Dans les machines d'impression 3D qui utilisent un procédé de dépôt par extrusion, un filament de plastique (généralement enroulé sur une bobine et déroulé pour fournir du matériau) est utilisé et appliqué à travers une buse d'extrusion, qui régule l'écoulement du plastique fondu - 1 -en contrôlant la vitesse d'alimentation du filament. La buse d'extrusion chauffe pour activer le matériau sous une forme approprié au dépôt. La buse d'extrusion peut être déplacée dans les directions horizontale et verticale par un mécanisme contrôlé par ordinateur dans le cas d'une imprimante cartésienne ou en coordonnées polaires dans le cas d'une imprimante delta et bras robotisé. En variante, la plate-forme de l'imprimante peut être déplacé par rapport à la buse d'extrusion, ou des mouvements coordonnés de la buse et de la plate-forme peuvent être utilisés pour obtenir le chemin d'extrusion souhaité dans les directions x, y et z. Le modèle ou la pièce est produit en extrudant un fil de matériau thermoplastique pour former des couches consécutives dans la direction verticale (c'est-à-dire z). Le matériau durcit immédiatement après l'extrusion à partir de la buse d'extrusion. Divers polymères, chargés ou non en fibre, additif ou métal sont utilisés dans un tel procédé de dépôt par extrusion, y compris, mais sans s'y limiter, les suivants : acrylonitrile butadiène styrène (ABS), polycarbonate (PC), acide polylactique (PLA), polyéthylène haute densité (PEHD), PC/ABS, polyphénylsulfone (PPSU) et de la famille des polyaryléthercétone (PAEK, PEEK, PEKK) ou encore poudre de métal aggloméré dans 5 à 10% de polymère dans le cas des impressions dites MIP - (moulage par injection de poudre ).

Généralement, le polymère se présente sous la forme d'un filament, fabriqué à partir de résines vierges ou chargée en fibre, additif ou métal.

La maîtrise de la qualité reste problématique car de nombreux paramètres influent sur l'homogénéité du dépôt de la matière thermoplastique, notamment la température de la matière extrudée, la température de la zone de dépôt, la vitesse de dépose et d'extrusion, la configuration de la pièce, etc. Le contrôle de la qualité implique de :
- Contrôler la qualité des pièces tout au long du processus de fabrication
- Optimiser les effets des paramètres du processus et signatures du procédé de fabrication sur la qualité des pièces.

La solution de prélèvement d'échantillons de pièces pour procéder à un contrôle destructif, afin de vérifier la présence de pailles ou porosité, de délamination, ou de tout autre défaut révélateur d'un processus mal maîtrisé de fabrication additive. L'invention s'applique aussi la fabrication additive de type DED ou Arc-fil WAAM (Wire Arc Additive Manufacturing en anglais).

### État de la technique

On connaît dans l'état de la technique la demande de brevet WO2017054842 décrivant un système de fabrication additive comprenant un dispositif de commande configuré pour :
- obtenir des informations de température à partir d'un ou plusieurs capteurs de température, chacun du ou des capteurs de température étant configuré pour mesurer la température d'une zone de pixels respective dans une pluralité de zones de pixels dans une zone de lit d'impression destinée à au moins une couche d'une pièce en cours d'impression dans un processus d'impression tridimensionnelle donné ;
- obtenir des informations de concentration d'agent, les informations de concentration d'agent reçues comprenant, pour chaque zone de pixels dans la pluralité de zones de pixels, une concentration de chacun d'une pluralité d'agents d'impression présente dans la zone de pixels respective ;
- sur la base des informations de température et des informations de concentration d'agent obtenues, pour chaque zone de pixels dans la pluralité de zones de pixels, déterminer la température de chaque agent d'impression dans la pluralité d'agents d'impression qui est présente dans la zone de pixels respective; et sur la base des températures définies pour chaque zone de pixels et chaque agent d'impression, déterminer une puissance à appliquer à un sous-système de chauffage utilisé dans le processus d'impression tridimensionnelle donné.

On connait aussi la demande WO2017/152142 qui concerne diverses améliorations apportées à la fabrication additive, y compris des techniques pour adapter des processus de fabrication de filaments fusionnés afin de fabriquer des objets métalliques avec des matériaux de construction métalliques.

Le brevet EP3398751 décrit un système comprenant un premier récipient pour recevoir une résine thermodurcissable, un deuxième récipient pour recevoir un additif de contrôle de durcissement et un troisième récipient pour recevoir un matériau de remplissage. Le système comprend en outre un mélangeur relié au premier récipient, au deuxième récipient et au troisième récipient. Le mélangeur sert à mélanger la résine, l'additif et le matériau de remplissage

Le brevet américain CN107225751 propose un équipement de moulage à grande vitesse et le procédé de préparation pour fournir une sorte de mousse conductrice, vise à résoudre le problème qui, en raison d'une faible efficacité de production lorsque l'assistance humaine produit de la mousse conductrice

Le brevet US5303141 décrit un système d'extrusion en boucle fermée (10) comprend une buse (12) pour extruder un matériau, tel qu'un adhésif thermofusible ; un appareil (14, 18, 46) pour positionner de manière contrôlée la buse conformément à la spécification ; et un capteur (60) pour générer un signal de rétroaction qui est indicatif d'au moins une caractéristique d'une partie la plus récemment extrudée du matériau. Le brevet US2019168458 décrit une imprimante tridimensionnelle (3D) comprenant un dispositif de distribution pour distribuer sélectivement des gouttelettes de liquide sur une couche de matériaux de construction et un contrôleur pour déterminer une zone présélectionnée sur la couche de matériaux de construction au niveau de laquelle le dispositif de distribution doit délivrer des gouttelettes de liquide, pour déterminer une distribution à laquelle des espaces doivent être formés lors de la distribution des gouttelettes de liquide dans la zone présélectionnée.

La demande de brevet US2017297095 décrit un procédé pour l'inspection en temps réel des dépôts de fabrication additive à l'aide de la thermographie infrarouge. Différents modes de réalisation peuvent permettre de mesurer les propriétés des matériaux et de détecter les défauts au cours du processus de fabrication additive. Différents modes de réalisation peuvent permettre la caractérisation de la qualité du dépôt, ainsi que la détection des défauts de dépôt, tels que les vides, les fissures, les décollements, etc., au fur et à mesure qu'une structure est fabriquée couche par couche dans un processus de fabrication additive. Ce document divulgue une installation de fabrication additive par dépôt de matière fondue comportant une buse pour le dépôt d'une matière sur une surface de réception supportée par un plateau mobile par rapport à ladite buse ainsi qu'un dispositif thermographique, ledit dispositif thermographique étant constitué par au moins deux caméras thermiques liées au référentiel de ladite buse d'extrusion et orientées autour de l'axe d'extrusion de ladite buse, le champs de vision desdites caméras thermiques étant déterminé afin de couvrir une zone entourant l'axe d'extrusion, l'installation comportant en outre une moyen d'enregistrement pour chacune des caméras de séquences de matrices historiées de température.

### Inconvénients de l'art antérieur

Les solutions de l'art antérieur présentent différents inconvénients.

En premier lieu, la thermographie de la pièce nécessite des capteurs de grande résolution, et des traitements numériques lourds pour extraire les informations pertinentes.

En second lieu, la configuration de la pièce et de la buse masque partiellement le champ de mesure thermographique, ce qui fausse les mesures.

Enfin, le Contrôle Non Destructif se réalise à posteriori par des dispositifs à rayonnement traversant (rayon X, tomographie par exemple) qui nécessite des traitements numériques lourds pour renseigner sur la présence de défauts et de plus ne renseigne pas sur la qualité des interfaces intercouches ni sur l'état physico-chimique de la matière déposée (cristallinité, ..)

### Solution apportée par l'invention

Afin de répondre aux inconvénients de l'art antérieur, l'invention concerne selon son acception la plus générale une installation de fabrication additive présentant les caractéristiques énoncées dans la revendication 1 et est mise en œuvre dans les procédés selon les revendications 4 et 5.

De préférence, les champs desdites caméras thermiques est compris entre 5 et 5000 fois la section médiane du fil d'extrusion.

Avantageusement, l'installation comporte en outre un moyen de mesure de la température de ladite buse et en ce que ladite buse est disposée partiellement dans le champ de l'une au moins desdites caméras thermiques.

L'invention concerne également un procédé de caractérisation d'une pièce réalisée par fabrication additive par dépôt de matière fondue caractérisé en ce qu'il comporte une étape d'acquisition à par au moins deux caméras thermiques liées au référentiel de ladite buse d'extrusion et orientées autour de l'axe d'extrusion de ladite buse, le champ desdites caméras thermiques est déterminé afin de couvrir une zone entourant l'axe d'extrusion avec une zone intermédiaire de recouvrement des champs, d'une séquence de matrices historiées de température (x, y, z, tₚᵤᵣₑ)ᵢ ainsi que de la position relative (X, Y, Z)ᵢ ou (R, Θ, Φ)ᵢ d'un point de référence de ladite buse par rapport audit plateau/support d'impression et d'enregistrement de ces données, ainsi qu'un traitement pour déterminer un jumeau numérique de ladite pièce, consistant à calculer un matrice (X,Y,Z, tₚᵤᵣₑ, t)ᵢ ou (R, Θ, Φ, tₚᵤᵣₑ, t)ᵢ de l'évolution localisée de la température. Selon une variante, le procédé comporte une étape d'acquisition par au moins deux de caméras thermiques liées au référentiel de ladite buse d'extrusion et orientées autour de l'axe d'extrusion de ladite buse, le champs desdites caméra thermique est déterminé afin de couvrir une zone entourant l'axe d'extrusion avec une zone intermédiaire de recouvrement des champs, d'une séquence de matrices historiées de température (x, y, z, tₚᵤᵣₑ)ᵢ ainsi que de la position relative (X, Y, Z)ᵢ ou (R, Θ, Φ)ᵢ d'un point de référence de ladite buse par rapport audit plateau/support d'impression et d'enregistrement de ces données, ainsi qu'un traitement pour déterminer une dérive spatiotemporelle de la température par rapport un modèle numérique de référence.

### Description détaillée d'un exemple non limitatif de réalisation

La présente invention sera mieux comprise à la lecture de la description qui suit, concernant un exemple non limitatif de réalisation illustré par les dessins annexés où
[Fig.1] La figure 1 représente une vue schématique d'un équipement de fabrication additive selon l'invention.

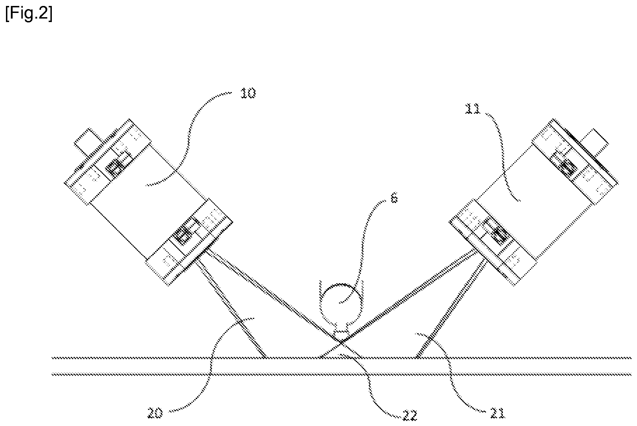

[Fig.2] La figure 2 représente une vue schématique des moyens de contrôle thermique de l'équipement de fabrication additive selon l'invention.

### Principes généraux

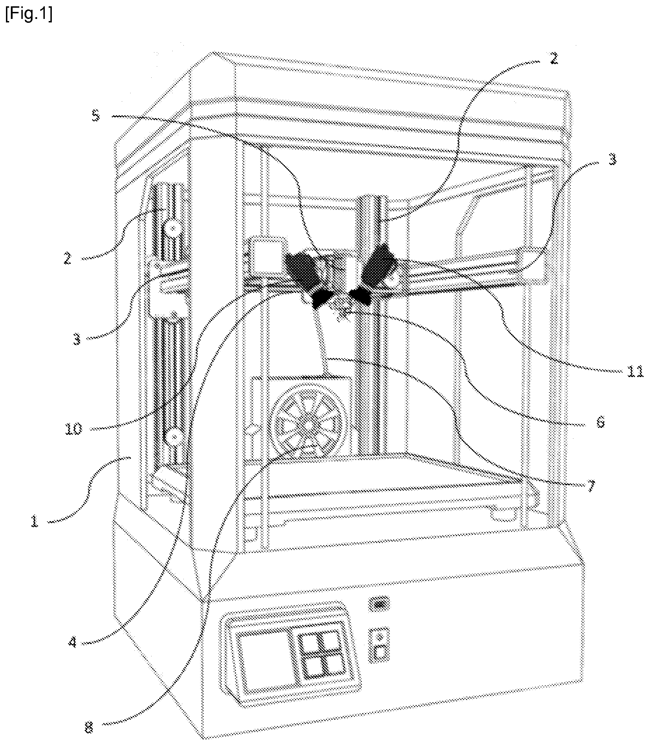

La figure 1 représente une vue schématique d'un équipement de fabrication additive à filament selon l'invention. L'installation est constituée de manière connue par une enceinte (1) entourant un bâti motorisé formé par des colonnes verticales (2) assurant le guidage et le déplacement suivant un axe vertical Z d'un cadre mobile formé de traverses (3) orientées d'avant en arrière selon l'axe Y et de traverses (4) orientées latéralement selon l'axe X. Ce cadre mobile supporte une tête d'extrusion (5) prolongée par une buse (6). La tête d'extrusion (5) est alimentée par un filament (7) provenant d'une bobine (8).

La tête d'extrusion (5) assure l'entraînement du filament (7) avec une vitesse réglable et pilotable, ainsi que son chauffage.

Les déplacements de la tête d'extrusion exprimés dans un repère globale cartésien X, Y, Z ou sphérique globale (R, Θ, Φ) sont contrôlés par un programme CFAO (Conception et Fabrication Assistées par Ordinateur). Lorsque le processus d'impression est lancé par l'utilisateur, le logiciel détermine par des calculs et visualisations dans l'espace comment et quand chaque couche de matière va être déposée. Il extrait du modèle numérique 3D une multitude de couches (cas cartésien) ou 3D à iso-surface de hauteur de dépose que la machine va imprimer de manière successive, strate par strate dont la cohésion intercouche est déterminante pour l'intégrité de la pièce.

Une fois le parcours d'impression défini, un moteur faisant tourner la bobine (6) pour acheminer le filament (7) de matière dans la zone chauffant de la tête d'extrusion (4) dont la température dépasse la température de fusion du matériau à transformer faisant ainsi fondre le filament (7). Le matériau fondu est déposé sous forme de fil fin sur une plaque support. L'enceinte et le plateau peuvent être chauffés pour assurer une température à l'intérieur de l'environnement d'impression permettant une mise en température de la pièce en formation, et réduire les différences de température entre la matière fondue délivrée par la buse (6) et la surface de dépose.

La buse (6) dépose la matière dans le plan X-Y ou iso-surface de hauteur de dépose. Une fois la couche complètement déposée, la buse monte à la couche suivante et recommence le processus. Selon le modèle d'imprimante, c'est la buse ou la plaque support qui se déplace, ceci n'ayant pas de conséquence sur le résultat final. Chaque couche de matière vient se solidifier sur la précédente, de bas en haut. Ainsi, les différentes couches de matière qui se sont superposées forment un objet imprimé en 3D, et cela avec plus ou moins de précision car il en dépend de la qualité de l'imprimante et du filament.

### CONTROLE THERMIQUE

L'installation comporte en outre d'au moins deux caméras thermiques (10, 11) qui captent le rayonnement infrarouge émis par la zone en cours de traitement pour fournir une image matricielle de NxM pixels, typiquement 320x240 pixels ou avec une résolution supérieure, avec un taux de rafraîchissement de 60 Hertz par exemple.

Les caméras (10, 11) sont disposées autour de l'axe d'extrusion, par exemple symétriquement de part et d'autre d'un plan médian. Elles sont orientées pour que leurs champs de vision (20, 21) se croisent à la verticale de la buse (6), à quelques millimètres en dessous, pour que les champs de mesure (20, 21) se recouvrent légèrement (22), et couvrent la zone de dépose et la surface environnante sur une dimension correspondant à la surface où se produit un échange thermique local lors de la dépose de la matière extrudée, typiquement une surface de dépose comprise entre environ 5x7 mm, et une surface environnante comprise entre environ 50x70 millimètres (champs de vision thermique combinée des caméras), quelle que soit la taille de la pièce à fabriquer.

Ces valeurs ne varient pas avec la taille de la pièce mais avec la taille du filament déposé. Il faut une surface environnante permettant d'avoir assez d'information sur le refroidissement ainsi qu'un nombre de pixel/µm² suffisant pour lire la température d'un filament

Les champs de mesure thermique peuvent contenir une partie du corps de la buse (6) ou de la tête d'extrusion (5), pour disposer d'une référence constante, la température de la buse (6) ou de la tête d'extrusion (5) étant connue par un capteur de température mono-élément (Pyromètre ou thermocouple par exemple) dont les données servent par ailleurs au pilotage du chauffage de la tête d'extrusion (5). Optionnellement, on procède à une calibration en continu en utilisant un corps à émissivité connu.

Les données sont enregistrées périodiquement dans une mémoire, sous forme d'un fichier numérique horodaté comprenant, pour chacun des enregistrements, la matrice de température (Tpure x, Tpure y, Tpure z) ou (Tpure R, Tpure theta, Tpure Phi)) et une information temporelle ou un numéro d'ordre permettant de disposer d'une séquence spatiotemporelle des variations des températures dans le voisinage de la buse (6).

Avec le même référentiel temporel, l'installation enregistre également les positions (X,Y,Z) ou (R, Θ, Φ) de la buse (6) et/ou associe la position pré-programmé du parcours, par l'intermédiaire des capteurs de position des axes de déplacement mesurable en temps réel. Ou alors on peut utiliser les trajectoires en fonction du temps défini par le G-CODE (Fichier générer par la FAO).

Avec le même référentiel temporel, les positions (X,Y,Z) ou (R, Θ, Φ) de la buse (6) sont également être enregistrées par l'installation et/ou associées à la position générée par le programme de parcours CFAO,

Ces enregistrements permettent de reconstruire l'évolution spatiotemporelle des variations des températures de la pièce fabriquée par l'installation en définissant un jumeau numérique de la pièce fabriquée permettant d'identifier l'origine d'un défaut, en cas de défaillance ultérieure.

Elles permettent aussi de piloter le fonctionnement de l'installation en temps réel par des traitements sur les données enregistrées afin de déterminer d'éventuelles dérives par rapport à des seuils, des modèles analytiques ou numériques prédéfinis représentant le comportement du matériau imprimé pour prédire la santé de la matière (état cristallin, porosité, tenue mécanique, qualité d'interface inter-couches, ...).

Le pilotage de l'installation peut comprendre un apport local d'énergie (laser/lampe IR par exemple) pour ajuster la température de la matière pré-déposée ou en cours de dépôt dans le voisinage de la buse (6) ou encore les paramètres d'impression (déplacement, vitesse, température, ..). Dans le cas d'une dérive, on peut utiliser un apport local d'énergie (laser/lampe IR,etc.), cet apport énergétique pouvant être piloté par ce système de contrôle.

Le jumeau numérique identifie des zones contenant de potentiels de défauts à partir des données thermiques afin de contrôler à posteriori les pièces par des dispositifs externes (CND, tomographie, ...). La corrélation entre le jumeau numérique et les post-contrôles qualité permettre d'améliorer les modèles pré-définis de manière itérative tel que le machine learning.

## Revendications

1. - Installation de fabrication additive par dépôt de matière fondue comportant une buse d'extrusion (6) pour le dépôt d'une matière fondue sur une surface de réception supportée par un plateau mobile par rapport à ladite buse (6) ainsi qu'un dispositif thermographique **caractérisée en ce que** ledit dispositif thermographique est constitué par au moins deux caméras thermiques (10, 11) liées au référentiel de ladite buse d'extrusion (6) et orientées autour de l'axe d'extrusion de ladite buse (6), le champs de vision (20, 21) desdites caméras thermiques (10, 11) est déterminé afin de couvrir une zone entourant l'axe d'extrusion avec une zone intermédiaire de recouvrement des champs de vision (20, 21), l'installation comportant en outre une moyen d'enregistrement pour chacune des caméras de séquences de matrices historiées de température (x, y, z, tₚᵤᵣₑ)ᵢ ainsi que de la position relative (X, Y, Z)ᵢ ou (R, Θ, Φ)ᵢ d'un point de référence de ladite buse (6) par rapport audit plateau ou à la dite surface de réception.

2. - Installation de fabrication additive par dépôt de matière fondue selon la revendication 1 **caractérisé en ce que** les champs de vision (20, 21) desdites caméras thermiques (10, 11) est compris entre 5 et 5000 fois la section médiane du fil d'extrusion.

3. - Installation de fabrication additive par dépôt de matière fondue selon la revendication 1 **caractérisé en ce qu'**elle comporte en outre un moyen de mesure de la température de ladite buse (6) et **en ce que** ladite buse (6) est disposée partiellement dans le champ de l'une au moins desdites caméras thermiques (10, 11).

4. - Procédé de caractérisation d'une pièce réalisée par fabrication additive par dépôt de matière fondue **caractérisé en ce qu'**il comporte une étape d'acquisition à par au moins deux caméras thermiques (10, 11) liées au référentiel de ladite buse d'extrusion (6) et orientées autour de l'axe d'extrusion de ladite buse (6), le champ de vision (20, 21) desdites caméras thermiques (10, 11) est déterminé afin de couvrir une zone entourant l'axe d'extrusion avec une zone intermédiaire de recouvrement des champs, d'une séquence de matrices historiées de température (x, y, z, tₚᵤᵣₑ)ᵢ ainsi que de la position relative (X, Y, Z)ᵢ ou (R, Θ, Φ)ᵢ d'un point de référence de ladite buse (6) par rapport audit plateau ou à la dite surface de réception et d'enregistrement de ces données, ainsi qu'un traitement pour déterminer un jumeau numérique de ladite pièce, consistant à calculer un matrice (X,Y,Z, tₚᵤᵣₑ, t)ᵢ ou (R, Θ, Φ, tₚᵤᵣₑ, t)ᵢ de l'évolution localisée de la température.

5. - Procédé de caractérisation d'une pièce réalisée par fabrication additive par dépôt de matière fondue **caractérisé en ce qu'**il comporte une étape d'acquisition par au moins deux de caméras thermiques (10, 11) liées au référentiel de ladite buse d'extrusion (6) et orientées autour de l'axe d'extrusion de ladite buse (6), le champs desdites caméra thermique est déterminé afin de couvrir une zone entourant l'axe d'extrusion avec une zone intermédiaire de recouvrement des champs, d'une séquence de matrices historiées de température (x, y, z, tₚᵤᵣₑ)ᵢ ainsi que de la position relative (X, Y, Z)ᵢ ou (R, Θ, Φ)ᵢ d'un point de référence de ladite buse (6) par rapport audit plateau ou à la dite surface de réception et d'enregistrement de ces données, ainsi qu'un traitement pour déterminer une dérive spatiotemporelle de la température par rapport un modèle numérique de référence.

## Patentansprüche

1. Anlage für additive Fertigung durch Auftragen von geschmolzenem Material, umfassend eine Extrusionsdüse (6) zum Auftragen eines geschmolzenen Materials auf eine Aufnahmeoberfläche, die durch eine relativ zu der Düse (6) bewegbare Platte getragen wird, sowie eine thermografische Vorrichtung, **dadurch gekennzeichnet, dass** die thermografische Vorrichtung aus mindestens zwei Wärmebildkameras (10, 11) besteht, die mit dem Bezugssystem der Extrusionsdüse (6) verbunden und um die Extrusionsachse der Düse (6) ausgerichtet sind, wobei das Sichtfeld (20, 21) der Wärmebildkameras (10, 11) bestimmt ist, um einen Bereich, der die Extrusionsachse umgibt, mit einem dazwischenliegenden Überlappungsbereich der Sichtfelder (20, 21) abzudecken, die Anlage ferner umfassend ein Mittel zum Aufzeichnen von Sequenzen historischer Temperaturmatrizen (x, y, z, tᵣₑᵢₙ)ᵢ für jede der Kameras sowie der relativen Position (X, Y, Z)ᵢ oder (R, Θ, Φ)ᵢ eines Referenzpunkts der Düse (6) relativ zur Platte oder zu der Aufnahmeoberfläche.

2. Anlage für additive Fertigung durch Auftragen von geschmolzenem Material nach Anspruch 1, **dadurch gekennzeichnet, dass** die Sichtfelder (20, 21) der Wärmekameras (10, 11) zwischen dem 5- und 5000-fachen des mittleren Querschnitts des Extrusionsdrahts betragen.

3. Anlage für additive Fertigung durch Auftragen von geschmolzenem Material nach Anspruch 1, **dadurch gekennzeichnet, dass** sie ferner ein Mittel zum Messen der Temperatur der Düse (6) umfasst und dass die Düse (6) teilweise in dem Feld mindestens einer der Wärmekameras (10, 11) angeordnet ist.

4. Verfahren zum Kennzeichnen eines durch additive Fertigung durch Auftragen von geschmolzenem Material hergestellten Teils,
**dadurch gekennzeichnet, dass** es einen Erfassungsschritt durch mindestens zwei Wärmekameras (10, 11) umfasst, die mit dem Bezugssystem der Extrusionsdüse (6) verbunden und um die Extrusionsachse der Düse (6) ausgerichtet sind, wobei das Sichtfeld (20, 21) der Wärmekameras (10, 11) bestimmt ist, um einen Bereich, der die Extrusionsachse umgibt, mit einem dazwischenliegenden Überlappungsbereich der Felder, eine Folge historischer Temperaturmatrizen (x, y, z, tᵣₑᵢₙ)ᵢ sowie die relative Position (X, Y, Z)ᵢ oder (R, Θ, Φ)ᵢ eines Referenzpunkts der Düse (6) relativ zu der Platte oder zu der Oberfläche zum Aufnehmen und Aufzeichnen dieser Daten sowie eine Verarbeitung zum Bestimmen eines digitalen Zwillings des Teils abzudecken, bestehend aus dem Berechnen einer Matrix (X,Y,Z, tᵣₑᵢₙ, t)ᵢ oder (R, Θ, Φ, tᵣₑᵢₙ, t)ᵢ der lokalen Temperaturänderung.

5. Verfahren zum Kennzeichnen eines durch additive Fertigung durch Auftragen von geschmolzenem Material hergestellten Teils,
**dadurch gekennzeichnet, dass** es einen Erfassungsschritt durch mindestens zwei Wärmekameras (10, 11) umfasst, die mit dem Bezugssystem der Extrusionsdüse (6) verbunden und um die Extrusionsachse der Düse (6) ausgerichtet sind, wobei das Sichtfeld der Wärmekameras bestimmt ist, um einen Bereich, der die Extrusionsachse umgibt, mit einem dazwischenliegenden Überlappungsbereich der Felder, eine Folge historischer Temperaturmatrizen (x, y, z, tᵣₑᵢₙ)ᵢ sowie die relative Position (X, Y, Z)ᵢ oder (R, Θ, Φ)ᵢ eines Referenzpunkts der Düse (6) relativ zu der Platte oder zu der Oberfläche zum Aufnehmen und Aufzeichnen dieser Daten sowie eine Verarbeitung zum Bestimmen einer raumzeitlichen Temperaturabweichung relativ zu einem digitalen Bezugsmodell abzudecken.

## Claims

1. Installation for additive manufacturing by deposition of molten material comprising an extrusion nozzle (6) for depositing a molten material on a receiving surface supported by a plate that is movable relative to said nozzle (6) as well as a thermographic device, **characterized in that** said thermographic device consists of at least two thermal cameras (10, 11) linked to the reference frame of said extrusion nozzle (6) and oriented about the extrusion axis of said nozzle (6), the field of view (20, 21) of said thermal cameras (10, 11) being determined so as to cover a region surrounding the extrusion axis with an intermediate region overlapping the fields of view (20, 21), the installation further comprising a means for recording, for each of the cameras, sequences of historical temperature matrices (x, y, z, tₚᵤᵣₑ)ᵢ as well as the relative position (X, Y, Z)ᵢ or (R, Θ, Φ)ᵢ of a reference point of said nozzle (6) with respect to said plate or to said receiving surface.

2. Installation for additive manufacturing by deposition of molten material according to claim 1, **characterized in that** the fields of view (20, 21) of said thermal cameras (10, 11) is between 5 and 5000 times the median cross-section of the extrusion filament.

3. Installation for additive manufacturing by deposition of molten material according to claim 1, **characterized in that** it further comprises a means for measuring the temperature of said nozzle (6) **and in that** said nozzle (6) is arranged partially in the field of view of at least one of said thermal cameras (10, 11).

4. Method for characterizing a part produced by additive manufacturing by deposition of molten material, **characterized in that** it comprises an acquisition step using at least two thermal cameras (10, 11) linked to the reference frame of said extrusion nozzle (6) and oriented about the extrusion axis of said nozzle (6), the field of view (20, 21) of said thermal cameras (10, 11) being determined so as to cover a region surrounding the extrusion axis with an intermediate region overlapping the fields of view, of a sequence of historical temperature matrices (x, y, z, tₚᵤᵣₑ)ᵢ as well as of the relative position (X, Y, Z)ᵢ or (R, Θ, Φ)ᵢ of a reference point of said nozzle (6) with respect to said plate or to said surface for receiving and recording these data, as well as processing in order to determine a digital twin of said part, consisting of calculating a matrix (X, Y, Z, tₚᵤᵣₑ, t)ᵢ or (R, Θ, Φ, tₚᵤᵣₑ, t)ᵢ of the localized evolution of the temperature.

5. Method for characterizing a part produced by additive manufacturing by deposition of molten material, **characterized in that** it comprises an acquisition step using at least two thermal cameras (10, 11) linked to the reference frame of said extrusion nozzle (6) and oriented about the extrusion axis of said nozzle (6), the field of view of said thermal cameras being determined so as to cover a region surrounding the extrusion axis with an intermediate region overlapping the fields of view, of a sequence of historical temperature matrices (x, y, z, tₚᵤᵣₑ)ᵢ as well as of the relative position (X, Y, Z)ᵢ or (R, Θ, Φ)ᵢ of a reference point of said nozzle (6) with respect to said plate or to said surface for receiving and recording these data, as well as processing in order to determine a spatiotemporal drift of the temperature with respect to a digital reference model.
